# EUROPEAN PATENT SPECIFICATION

(11) **EP 2 495 509 B1**
(45) Date of publication and mention of the grant of the patent: **12.11.2014**
(21) Application number: 11009219.4
(22) Date of filing: 21.11.2011
(51) Int. Cl.: F24J 2/54, F16H 25/18, F16H 25/20

(54) **Solar panel system**
Solarzellensystem
Système de panneau solaire

(30) Priority: 24.11.2010 US 416841 P
(43) Date of publication of application: 05.09.2012
(73) Proprietor: Magna Closures Inc., Newmarket, ON L3Y 4X7 (CA)
(72) Inventor: Schatz, Kurt, Newmarket, Ontario L3X 2R3 (CA); DiBlasio, Dominic, Queensville Ontario, L0G 1R0 (CA); O'Neill, Austin, Midland, Ontario L4R 1X9 (CA); Frommer, Thomas, P., Mount Albert Ontario L0G 1M0 (CA); Caron, Stephen, James, Aurora, L4G 7X5 (CA); Baruco, Samuel, R., Aurora, Ontario L4G 7X2 (CA)
(74) Representative: Hössle, Markus

(56) References cited:
- EP-A1- 1 860 386
- EP-A2- 2 071 254
- DE-A1-102005 013 334
- DE-U1-202009 011 929
- JP-A- 2007 180 484
- KR-A- 20090 076 873

## Description

### Field of the Invention

The invention relates to the art of solar panel systems, and in particular to actuation systems for controlling the azimuth and elevation angles of a solar panel and to system architectures for controlling large numbers of solar panels.

### Background of the Invention

To obtain the maximum efficiency out of a solar panel it is necessary to change the position the panel to track the position of the sun as it moves across the sky.

It is desirable for the solar panel actuator system to be robust, and have a long service life. In a solar farm, where thousands of panels may be deployed, it may be necessary to utilize thousands of solar panel actuators, so low cost is an important concern. Similar concerns arise for the consumer market.

Likewise, it may be necessary to control large numbers of solar panels in an efficient manner.

KR 10-2009-0076873 A discloses a tracking system structure for solar power generation comprising a support pillar fixed to a concrete structure prepared underground with a anchor bolt, a support pillar upper flange being welded into the upper part of the support pillar, a yawing module installed at the one side of the support pillar upper flange, a swing module rotated in the vertical shaft of the support pillar, and a solar cell module rotating from side to side with the drive of the yawing module based on a yawing axis coupled on the swing module.

DE 20 2009 011 929 U1 discloses a solar panel assembly comprising a foundation column on the top of which horizontal and vertical tracking elements are provided. The foundation column further comprises a roof structure for sheltering electrically powered vehicles during the charging process.

JP 2007-180484 A discloses a sun tracking system including a base body, a support pedestal which is rotatively supported on the base body with a first axial line as the centre, a panel assembly which is rotatively supported on the support pedestal with a second axial line as a centre, a first driving mechanism for making the support pedestal turn, a second driving mechanism for making the panel assembly turn, a sun position-detecting means for detecting the position of the sun, and a control means which controls the operation of the first and second driving mechanisms, on the basis of a detection signal of the sun position detecting means.

### Summary of the Invention

According to the invention a solar panel assembly is provided which includes: a foundation tube; a rotary actuator mounted in the foundation tube, the actuator having a rotating plate extending out of an end of the foundation tube; a linear actuator having a stationary portion and an extensible portion; a bracket mounted to the rotating plate, the bracket having an arm mounted to one of the linear actuator stationary portion and the linear actuator extensible portion; and a frame for holding a photovoltaic panel, the frame being pivotally mounted to the bracket and the frame having an arm connected to the other of the linear actuator stationary portion and the linear actuator extensible portion.

The rotary actuator preferably includes: a motor; a gearbox driven by the motor; a drive screw connected to and driven by an output of the gearbox; a spindle screw connected to the rotating plate; a drive nut having a first threaded hole for receiving a thread of the drive screw and a second threaded hole for receiving a thread of the spindle screw, the guide nut having a guide fin; and a guide rail interacting with the nut guide fin to constrain the nut from rotating, whereby the rotation of the drive by screw by operation of the motor causes the nut to translate linearly which in turn causes the spindle screw to rotate.

The motor is preferably a low cost, brushed DC motor, of approximately 0.5 - 3 Nm output. The gearbox provides a gear reduction between an output of the motor and an output the gearbox, and wherein the turns ratio between the drive screw and the spindle screw provides a gear reduction between the drive screw and the spindle screw. Overall, a high reduction, e.g., 7500:1 gear reduction, is provided between the motor and rotating plate.

The guide rail is preferably provided in the form of a tubular housing. The motor and gear box are connected to the tubular housing. The drive screw, spindle screw and nut are each disposed with the tubular housing, and it has a channel for receiving the guide fin of the nut.

The linear actuator preferably includes: a motor; a gearbox driven by the motor; a drive screw connected to and driven by an output of the gearbox; a first tube encompassing the drive screw, the first tube being connected to one of the frame arm and the bracket arm; a second tube partially mounted in and extensible from the first tube, the second tube being pivotally connected to the other of the frame arm and the bracket arm in a manner so as to prohibit substantive rotation of the second tube relative to the first tube; and a drive nut having a threaded hole for receiving a thread of the drive screw, the drive nut being disposed within the second tube and having a splined connection to at least one of the first and second tube in order to prohibit rotation of the drive nut, whereby the drive nut translates linearly causing the second tube to slide linearly relative to the first tube as the drive screw is rotated by said motor and gearbox.

An end portion of the linear actuator drive screw distal of the gearbox output is preferably connected to a concentric post that spaces the drive screw away from inner walls of the second tube. The non-connected end of the second tube preferably includes an end cap disposed within the first tube, the end cap and concentric post spacing the outer wall of second tube away from the inner wall of the first tube. And the end of the first tube distal from the gearbox preferably includes an annular seal contacting the outer wall of the second tube.

### Brief Description of the Drawings

The foregoing and other aspects of the invention will be more readily appreciated having reference to the drawings, wherein:

Fig. 1 is a fragmentary perspective view of a drive unit for angular and azimuth control of a solar panel assembly;

Fig. 2 is an isolated assembly view of a rotary actuator employed in the solar panel assembly;

Fig. 3 is a fragmentary view of the rotary actuator, with a guide tube and other elements in Fig. 2 removed from view;

Fig. 4 is a cross-sectional view taken along line IV-IV in Fig. 2;

Fig. 5 is a front view of an upper portion of the rotary actuator shown in Fig. 3;

Fig. 6 is an isolated assembly view of a linear actuator employed in the solar panel assembly;

Fig. 7 is a partial cross-sectional view taken along line VII-VII in Fig. 6;

Fig. 8 is a fragmentary view of the linear actuator shown in Fig. 7, taken from a different perspective;

Fig. 9 is a system block diagram of a first control architecture for controlling a plurality of solar panels according to a one embodiment;

Fig. 10 is a system block diagram of a second control architecture for controlling a plurality of solar panels according to a second embodiment;

Fig. 11 is a perspective view of the solar panel assembly including a preferred photovoltaic panel;

Fig. 12 is a fragmentary view of a double screw rotary actuator, with a guide tube and other elements removed from view; and

Fig. 13 is a detail view of a drive train used to spin the double screw rotary actuator shown in Fig. 12.

### Detailed Description of the Invention

A. System Summary

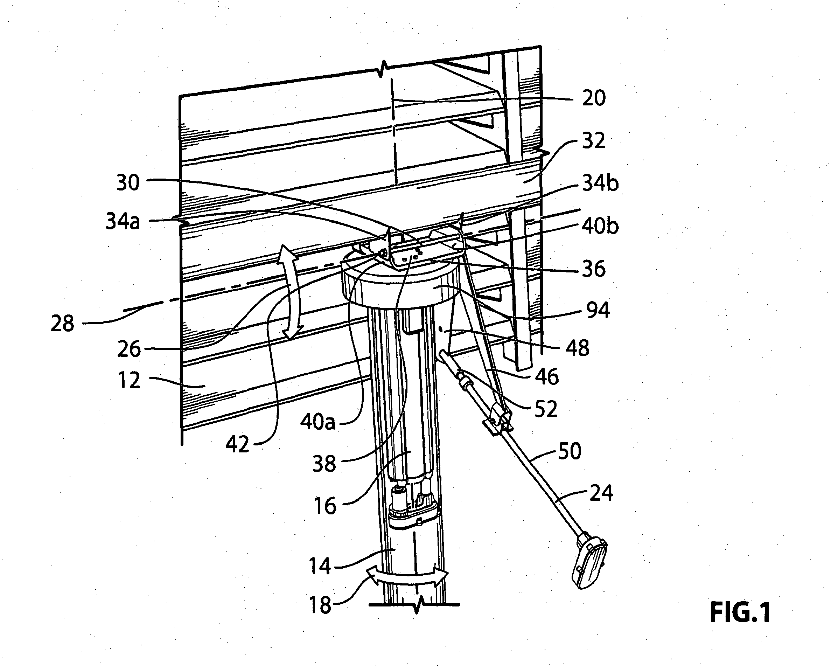

Fig. 1 shows a solar panel assembly 10 comprising a photovoltaic panel frame 12 (only the rear of which is shown) mounted onto a foundation tube 14. The assembly 10 includes a rotary actuator 16 installed within the foundation tube 14 for varying the azimuth 18 of the panel frame 12 about a vertical axis 20 defined by the foundation tube 14. The assembly 10 also includes a telescoping linear actuator 24 for varying the elevation angle 26 of the panel frame 12 about a horizontal axis 28 defined by a hinge shaft 30.

More particularly, the panel frame 12 includes a structural cross beam 32 able to support the weight of the panel frame 12 and any photovoltaic modules mounted thereon. The crossbeam 32 includes two spaced apart mounting flanges 34a, 34b for mounting the panel frame 12 onto a bracket 36. The bracket 36 features a mounting plate 38 terminating in two uprising, spaced apart wings 40a, 40b. The hinge shaft 30 is installed through openings in the spaced apart wings 40a, 40b and mounting flanges 34a, 34b. Capstans or nuts 42 secure the hinge shaft 30.

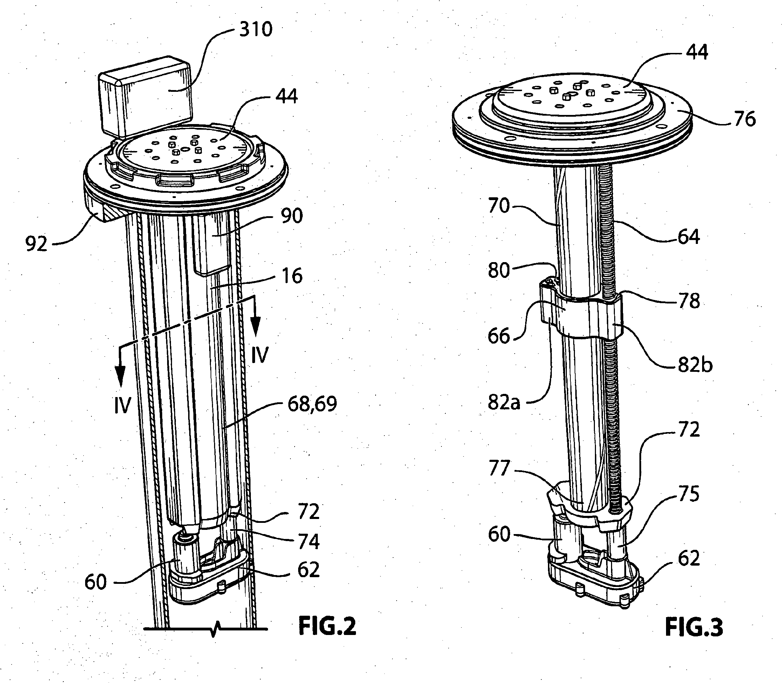

The bracket mounting plate 38 is bolted onto a rotating plate 44 (seen best in Figs. 2 or 3) positioned atop the foundation tube 14, as discussed in greater detail below. The rotary actuator 16 rotates this plate 44, and hence the panel frame 12.

The bracket 36 includes an arm 46 that supports a stationary portion 50 of the linear actuator 24. An extensible portion 52 of the linear actuator 24 is connected to an arm 48 that is rigidly connected to the panel crossbeam 32. Thus, the linear motion of the extensible portion 52 is converted into pivotal motion of the panel frame 12 about the hinge shaft 30.

B. Panel Frame

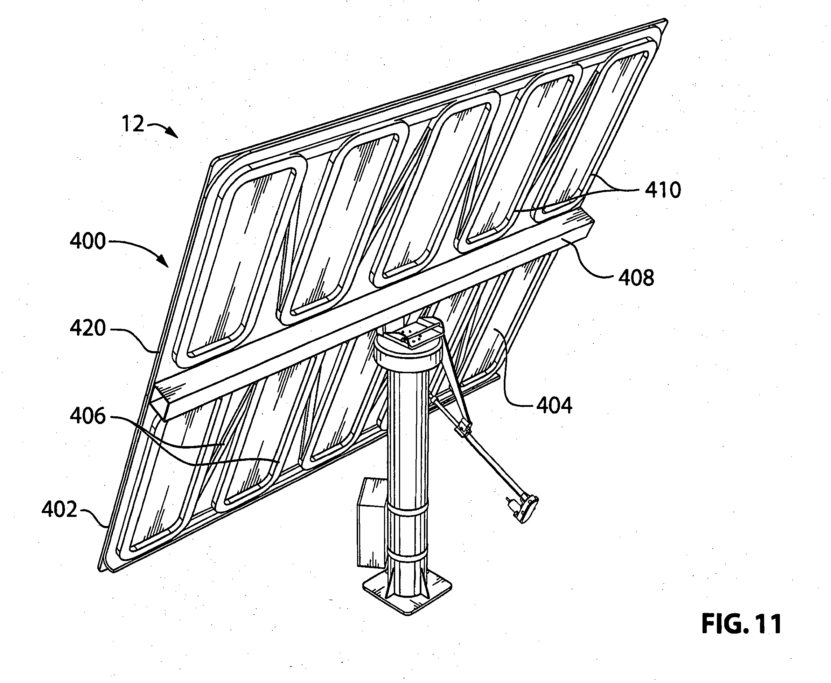

Fig. 11 shows a preferred embodiment of the panel frame 12, which includes a panel 400 having a flat front face 402 and a more complex rear face 404. The front face 402A carries a plurality of solar cells or photovoltaic modules 420 such as Mitsubishi TD 190MF5 models which weigh about 40 pounds per module. As these components are relatively heavy, e.g., collectively exceeding four hundred pounds or so, the rear face 404 of the panel 400 includes stiffening ribs 406 to reduce the overall thickness of the panel 400 for a given load. In the most preferred embodiments the panel 400 is formed out of aluminum in a one-shot molding process known in the automotive arts as "superplastic forming" that is described, inter alia, in US Patent 5,974,847, which is hereby incorporated by reference in its entirety. As such, the panel 400 can be formed so that the stiffening ribs 406 or other structural support features are integrally formed with the flat front face 402. In the illustrated embodiment, the panel has a breadth of about 3.3 x 4.3 meters and the thickness of the panel 400 is about 3 mm, giving the panel an overall weight of about three hundred and sixty pounds. An aluminum cross-beam 408 weighing about one hundred pounds is mounted to the panel 400 and connected to the rotary and linear actuators as described above. Still, with aluminum plastic forming, the panel frame 12 is expected to weigh less than a conventional steel structure, enabling the use of smaller rotary and linear actuators.

In the illustrated embodiment the stiffening ribs 406 are arranged as a series of upper and lower rectangular-shaped stiffening members 410. The stiffening members increase the rigidity of the panel 400 to more effectively retain its orientation to the sun. In addition, the two rows of stiffening members 410 define a channel therebetween for mounting the aluminum cross-beam 408. The rear face of the panel 400 can also be used to mount other electrical components thereto such as micro-inverters (not shown).

C. Rotary Actuator

The rotary actuator 16 is shown in greater detail in the isolated views of Figs. 2 - 5. Referring additionally to these Figures, the rotary actuator 16 includes a motor 60 driving a reduction gearbox 62 that in turn rotates a drive screw 64. The drive screw 64 is coupled by a nut 66 and a guide rail 68 to a spindle screw 70 that is connected to the rotating plate 44.

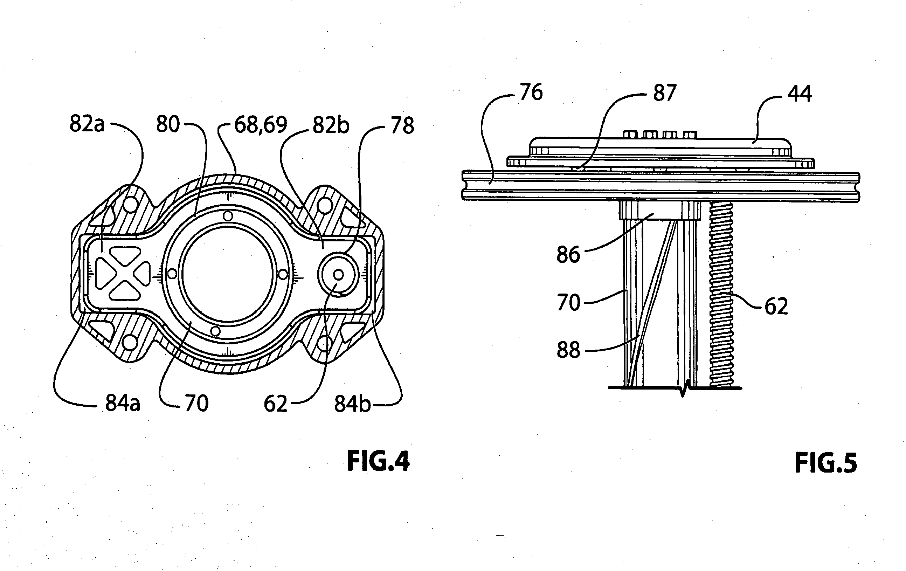

More particularly, the guide rail 68 is provided in the illustrated embodiment as a tubular guide 69 (seen best in the cross-sectional view of Fig. 4) which encompasses the drive screw 64, nut 66 and lead screw70. The tubular guide 69 includes a fixedly mounted plug 72 at a bottom end thereof for sealing and supporting the tubular guide 69. The spindle screw 70 is rotationally mounted to the internal or top side of the plug 72 by a bearing 74. The motor 60 is fixedly mounted to the external or bottom side of the plug 72.

By way of example, a suitable motor is 1.2 Nm 12V brushed DC motor manufactured by Harbin Electric of China.

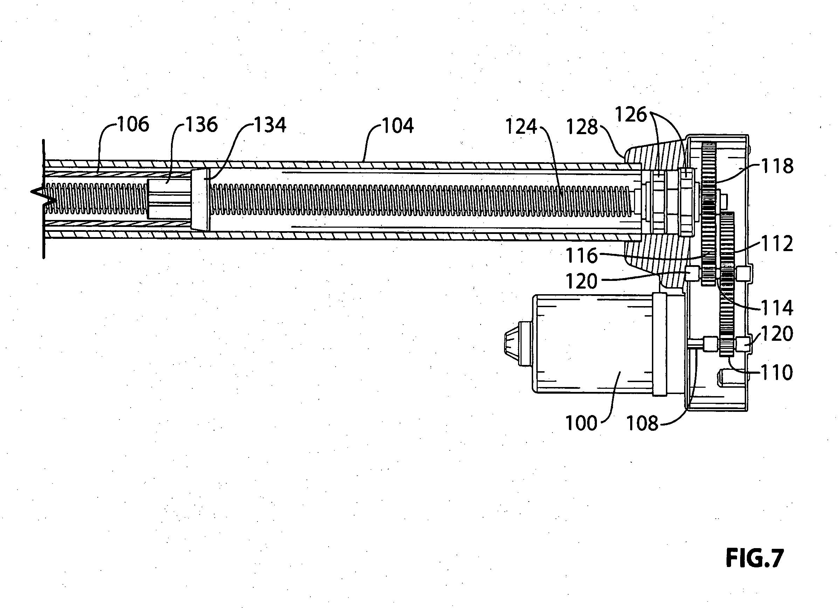

The gearbox 62 preferably provides a large gear reduction, e.g., a 26:1 reduction. The gearbox 62 is preferably identical to a gear box utilized in the linear actuator 24, as shown in Fig. 7 and discussed in greater detail below

The output gear of the gearbox 62 is rigidly connected to the drive screw 64, thus rotating the drive screw 64. A cover 75 shields the drives screw 64 in the portion between the gearbox 62 and plug 72. This portion of the drive screw need not be threaded, and thus a tight tolerance may be provided between the shaft of the drive screw and a hole 77 formed in the plug 72 for passage of the drive screw therethrough.

The other end of the drive screw 64 is rotatingly mounted via a small axle (not shown) to a base plate 76 that caps and plugs the open end of the foundation tube 14. (The rotating plate 44 lies above the open end of the foundation tube 14.) The drive screw 64 thus rotates in situ. In the illustrated embodiment, the drive screw 64 is preferably formed from steel and has a ¾ inch diameter, 8 turns per inch, Acme thread.

The nut 66 is preferably formed from Acetal or other hard plastic with lubricating properties. As seen best in Fig. 4, the nut 66 has two threaded nut holes 78, 80, one 78 to matingly receive the threads of the drive screw 64, and the other 80 to matingly receive the thread of the spindle screw 70. The nut 66 also features two opposing guide fins 82a, 82b that each fit into two opposing channels 84a, 84b formed in the guide tube 69.

As seen best in Fig. 5, the spindle screw is journaled to the base plate 76 via a bushing 86 that fits over the spindle screw 70. The rotating plate 44 is bolted to the to an end shoulder of the spindle screw 70, or alternatively to bushing 86, and a series of ball, roller and/or other type of bearing 87 is positioned between the rotating plate 44 and the base plate 76 to enable the former to smoothly slide over the latter.

The spindle screw 70 preferably features a dual start, low turn ratio, lead thread 88. In the illustrated embodiment, the lead screw has a 0.03 turns per inch thread on a 2.4 diameter, hollow aluminum shaft. The thread 88 preferably has approximately 240° of turn over the length of the spindle screw 70, which is sufficient to meet the east - west tracking requirements of the solar panel. Overall, with the 26:1 reduction provided by the gearbox 62 and an approximately 285 turns ratio between the drive screw 64 and the spindle screw 70, an approximately 7500:1 reduction is provided between the motor 60 and the spindle screw 70. Those skilled in the art will appreciate that a wide variety of other component dimensions and drive ratios may be employed in a commercial rotary actuator.

In operation the motor 60 and gearbox 62 rotate the drive screw 64, which is constrained to spin in situ. The nut 66 receives the torque provided by the drive screw 64, however, the nut 66 is prevented from rotating due to the entrapment of its guide fins 82a, 82b within the channels 84a, 84b of the tubular guide 69. Accordingly, the nut 66 translates linearly upon receipt of the torque imparted by the drive screw 64. As the nut 66 translates, it will in turn impart torque to the spindle screw 70, causing the spindle screw to likewise spin in situ, and in the process turn the rotating plate 44. Clearly, operating the motor in one rotational sense will cause the rotating plate to turn in a first rotational sense and operating the motor in the opposite rotational sense will cause the rotating plate to turn in a second, opposite rotational sense.

Advantageously the rotary actuator 16 may be preassembled as an independent unit and slid into the foundation tube 14 as a unit. An electronics box 60 may also be attached to the guide tube 68 and thus mounted in the foundation tube 14. The base cap 76 seats on a reinforcing flange 92 situated at the top of the foundation tube 14, and a water and dust shield 94 (Fig. 1) covers the base cap 76 and rotating plate 44.

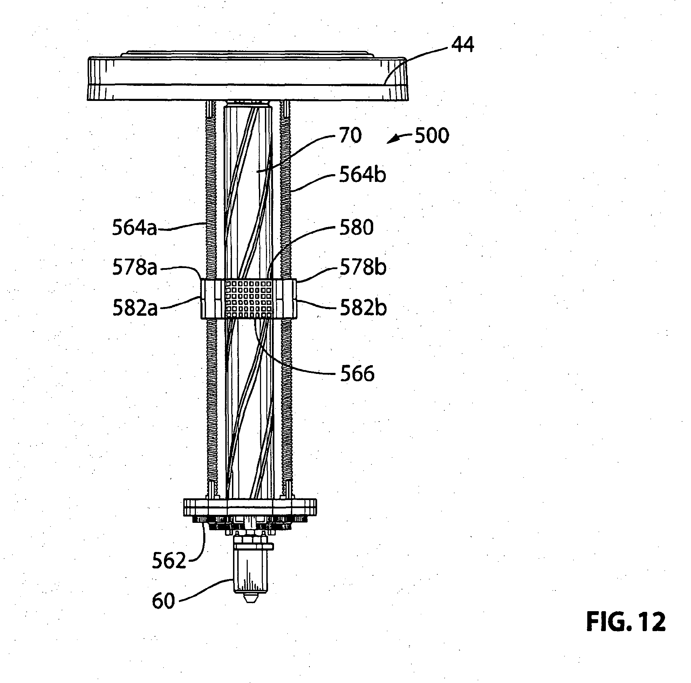

Fig. 12 shows the innards of an alternative rotary actuator 500, which has two drive screws contained with a guide tube (not shown). The rotary actuator 500 includes motor 60 driving a reduction planetary drivetrain 562 that rotates two drive screws 564a. 564b. The drive screws 564a, 564b are coupled by a nut 566 and the guide tube (not shown) to spindle screw 70 that is connected to rotating plate 44. The nut 566 has three threaded nut holes 578a, 578b and 580; two 578a and 578b to matingly receive the threads of the drive screws 564a, 564b, respectively, and the other 580 to matingly receive the thread of the spindle screw 70. The nut 566 also features two opposing guide fins 582a, 582b that each fit into two opposing channels formed in the guide tube.

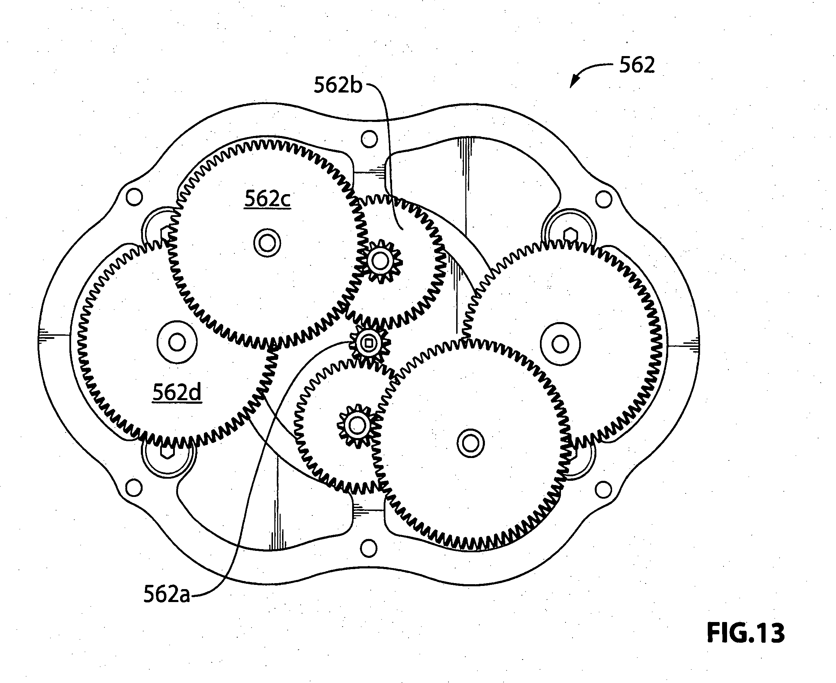

Fig. 13 shows the reduction planetary drivetrain 562 in greater detail. The motor 60 drives a pinion gear 562a. The pion gear 562a drives two first stage spur gears 562b. The two first stage spur gears 562b each drive a second stage spur gear 562c which, in turn, each drive a third stage gear 562d that is rigidly connected to one of the drive screws 564a, 564b.

The rotary actuator 500 works substantially similar to that of the single screw rotary actuator 16. The addition of another drive screw helps to even out the torques experienced by the assembly and reduce bending moments and other stresses on the relatively long drive components.

D. Linear Actuator

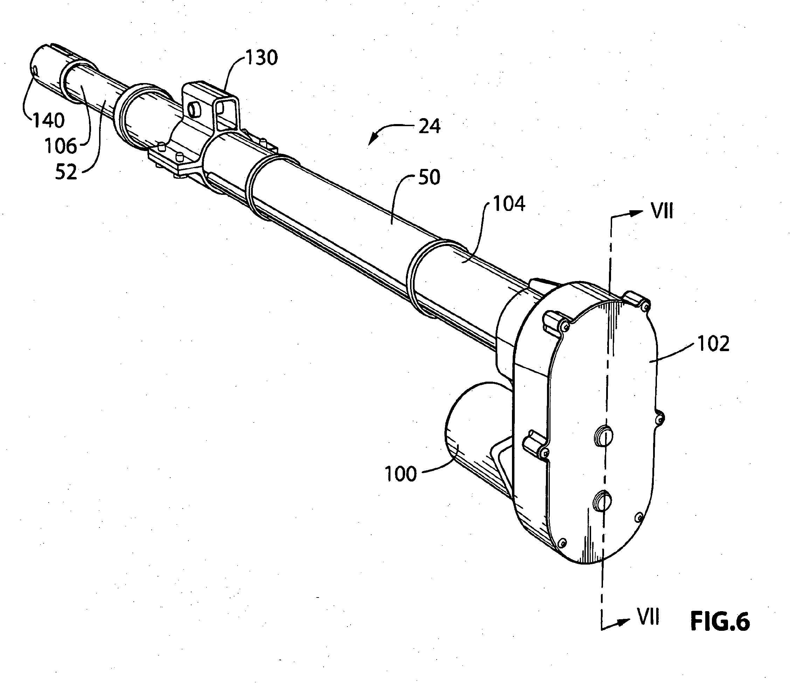

The linear actuator 24 is shown in isolation in Figs. 6 to 8. The stationary portion 50 of the linear actuator includes a motor 100, gearbox 102 and a base or outer tube 104. The extensible portion 52 includes an inner tube 106 that fits within the outer tube 104 and extends therefrom.

The motor 100 may be the aforementioned 1.2 Nm. 12 volt brushed DC motor. As seen best in Fig. 7, the motor 100 has an output shaft 108 coupled to a spur gear 110 mounted in the gearbox 102. The spur gear 110 drives a first reduction gear 112 that is mounted on a shaft 114 journaled in the gearbox 102. The shaft 114 also contains a second spur gear 116 that drives an output gear 118. Sleeve bearings 120 journal the shafts 108, 114 within the gearbox 102.

The output gear 118 is fixed at its rotational axis to a drive screw 124. The drive screw 124 has a non-threaded butt end portion which is journaled in the gearbox via two large tapered roller bearings 126. The drive screw in the illustrated embodiment is a ¾ inch diameter, 8 turns per inch, stainless steel screw.

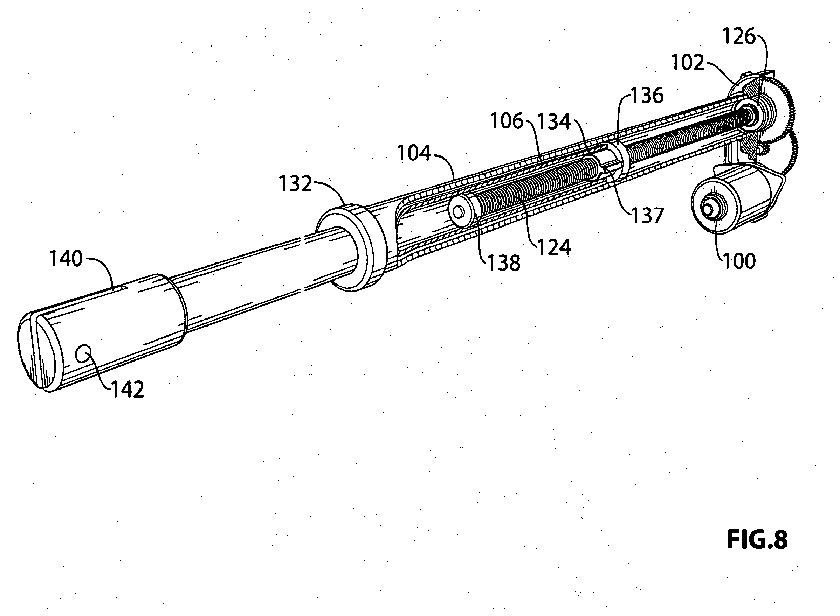

The stationary outer tube 104 is preferably adhesively bonded to the walls of an inlet 128 in the gearbox. A fixture 130 (Fig. 6) is attached to the exterior of the outer tube 104 and mounted to the arm 46 of the bracket 36. The outer tube 104 includes a concentric wiper seal 132 (Fig. 8) at the end of the tube 104 distal of the gearbox 102, the seal 132 contacting the extensible tube 106 to prevent dirt from entering the system.

The extensible inner tube 106 fits within the stationary outer tube 104 and partially encompasses the drive screw 124. A drive nut 104 is fitted over the drive screw 124 and has threads that matingly receive the threads of the drive screw 124. The drive nut is positioned within extensible inner tube 106 and has two opposing splines 137 that engage two slots (not shown) in the extensible inner tube 106.

The extensible inner tube 106 includes an end cap 136 to seal the inner tube 106 against the interior wall of the outer tube 106. The end cap 136 also enables a small gap to be maintained between the exterior wall of the inner tube 106 and the interior wall of the outer tube 104, and the cap is preferably formed from a slick material in order to minimize friction as the cap slides along the interior wall of the outer tube 104. Likewise the drive screw 124 includes a centralizing post 138 that assists in maintaining good clearance between the drive screw 124 and the walls of the extensible inner tube 106 and the post 138 is preferably formed from a slick material in order to minimize friction as the extensible inner tube 106 slides.

The end of the extensible inner tube 106 distal from the motor includes an attachment member 140 that features a pinned connection 142 for coupling the extensible inner tube 106 to the arm 46 connected to the panel crossbeam 32.

In operation, the motor 100 and gearbox 102 rotate the drive screw 124, which spins in situ. The drive nut 134 receives the torque from the drive screw 124 but is constrained from rotating due to its splined interconnection with the inner tube 106, which is itself precluded from rotating as a result of the pinned connection 142 with the arm 46. Consequently the drive nut 134 translates linearly, moving the inner extensible tube 106 relative to the stationary outer tube 106. Those skilled in the art will appreciate that the drive nut could additionally or alternatively have a splined interconnection with the outer tube and be used to push the inner tube outward or collapse it inwards, for example, by placing the drive nut between two interference features within the inner tube.

It will also be appreciated that while the illustrated embodiment has the arm bracket 46 connected to the stationary portion 50 of the linear actuator and the crossbeam arm 48 connected to the extensible portion 52 of the linear actuator the opposite arrangement may be effected in alternative embodiments. In other words, in an alternative embodiment, arm bracket 46 is connected to the extensible portion 52 of the linear actuator and the crossbeam arm 48 is connected to the stationary portion 50 of the linear actuator 24.

E. Electronics

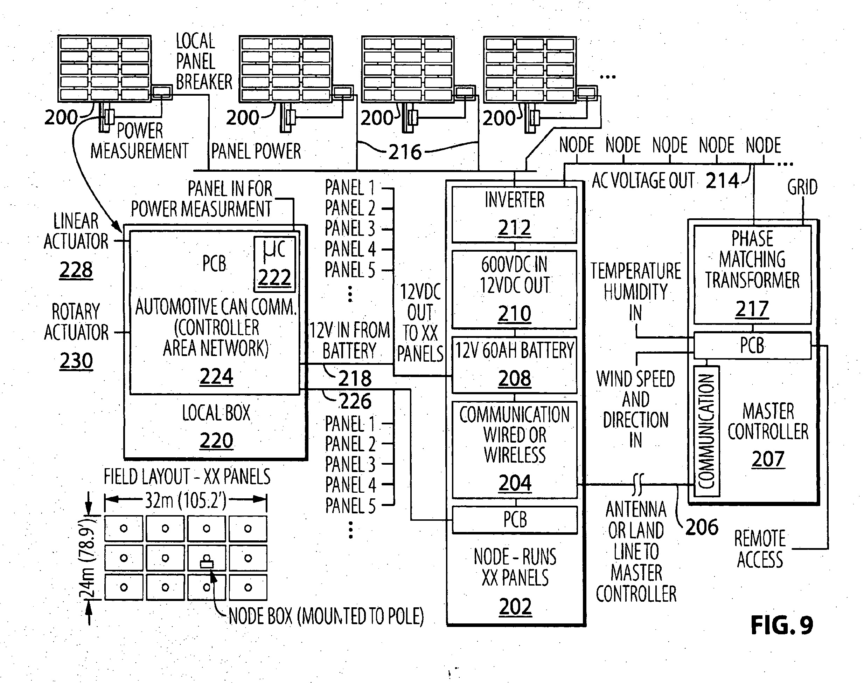

Fig. 9 shows one embodiment of a control architecture for controlling a plurality of solar panels, for example, in the deployment of a solar farm. In this architecture, a subgroup of panels 200 are controlled by a local master 202 that connects via a network controller 204, such as an Ethernet controller or Controller Area Network (CAN) controller, to a master controller 207 via a wire or wireless communication link 206. In this embodiment, the local master 202 includes a 12 volt 50 or 60 amp hour battery 208 and a charger 210 which uses energy harvested from the solar panels to charge the battery 208. The battery charge, in turn, is fed out as a 12 volt DC signal 218 to supply the electronics driving each individual panel 200. The local master 202 also includes a DC to AC converter or inverter 212 which receives the electricity generated by the solar panels 200 in lines 216 and converts the DC power to an AC power voltage 214 for distribution to the power grid via a phase matching transformer.

In this embodiment each solar panel 200 also includes a local controller 220. The local controller 220 includes a microcontroller 222 which communicates with the local controller preferably via a wired communications link 226 such as provided by CAN controller 224. The actuation system for repositioning the solar panel may be controlled by commands received over the communication links 204, 206, 224, 226 and executed by the microcontroller 222 which, in turn, controls the motors of the rotary and linear actuators via motor control lines 228, 230.

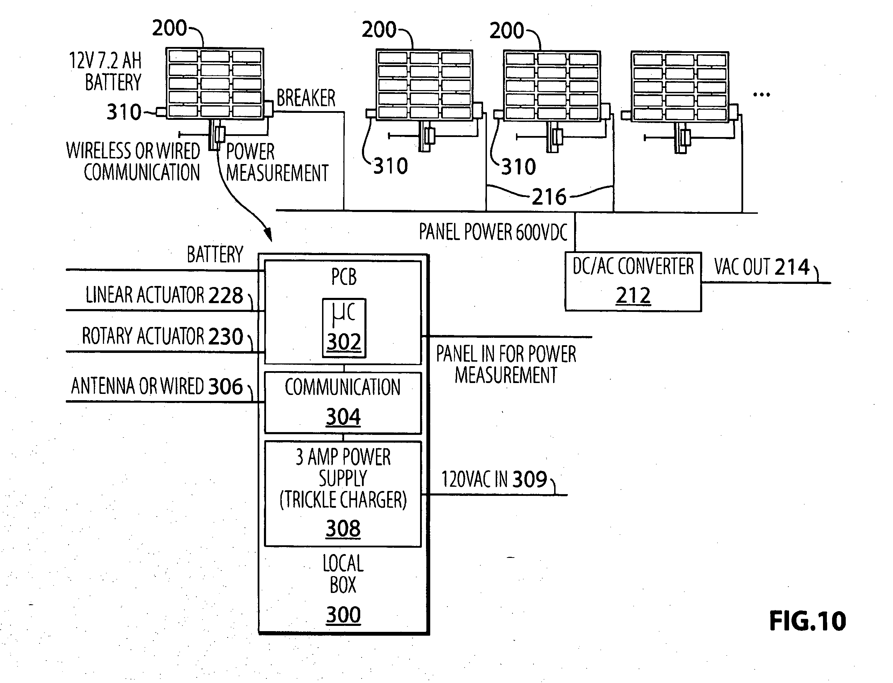

Figure 10 shows another embodiment of a control architecture omitting the local master. In this architecture, each solar panel 200 is associated with a local controller 300. The local controller 300 includes a microcontroller 302 which communicates with a master controller (not shown) via a network controller 304, such as may be provided by an Ethernet controller or CAN controller, and communication link 306. The local controller 300 incorporates a small (e.g., 3 amp) power supply and trickle charger 308 which is directly fed with line 120 volt AC power 309. In this embodiment, every solar panel 200 includes a rechargeable battery 310 (see also Fig. 2) which is charged by the power supply and trickle charger 308. A DC to AC converter 212 is provided for receiving the electricity generated by the solar panels 200 in lines 216 and converts the DC power to a high voltage AC signal 214 for distribution to the power grid. The position of the solar panel is controlled by providing operational commands to the microcontroller 302 which, in turn, controls the motors of the rotary and linear actuators via control lines 228, 230.

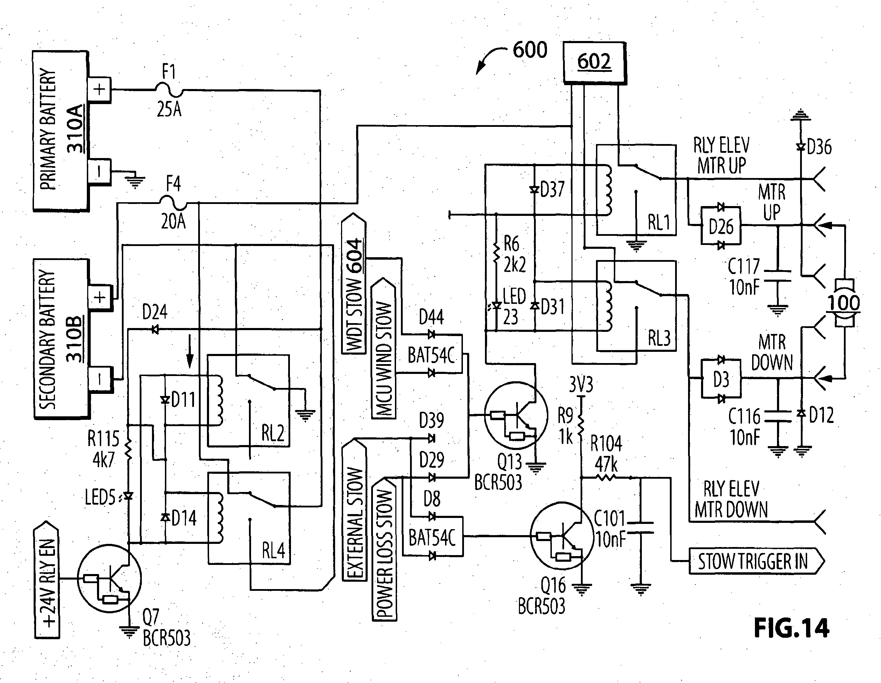

Fig. 14 shows a circuit diagram of a hard wired stow control circuit 600. The photovoltaic panel 12 has a relatively large cross-sectional area that can be subject to considerable wind loads. At certain times, it is desirable to place the solar panel assembly 10 in a stow condition wherein the panel 12 is placed horizontal to the ground. A stow condition can be: wind speeds higher than 35km/h (reading provided by wind speed sensor, not shown); loss of local controller power; loss of charging current; manual user command to stow; software malfunction; and a master stow (gang system) command.

In the preferred embodiment motor two rechargeable batteries 310a, 310b are used to power the actuators and the drive electronics. The two batteries 310a, 310b are each preferably 12 volt batteries that are normally connected in parallel. This doubles the current capacity of the system, and increases the amount of time the system can operate without recharging the batteries. However, during a stow condition, the circuit 600 automatically reconfigures the batteries 310a in series to operate at least the linear actuator motor at 24 volts. This increases the speed of the motor(s) thereby reducing the time it takes to bring the photovoltaic panel 12 to the horizontal position.

The stow control circuit 600 is shown in Fig. 14 in its nominal operating state. In this state relay RL2 connects the negative terminal of battery 310b to ground and relay RL4 connects the positive terminal of battery 310a to the positive terminal of battery 310b. The batteries 310a, 310b are thus connected in parallel and feed conventional motor drive circuitry 602. Note that in this state relays RL 1 and RL3 are configured to apply 12 volt power modulated by the motor drive circuitry 602 to the linear actuator motor 100.

However, when a stow condition is detected on any of signal lines 604, relays RL 1 and RL3 are energized to switch out the motor drive circuitry 602 and directly apply power from the batteries 310a, 310b to the linear actuator motor 100. In this state, relays RL2 and RL4 also energize. Relay RL2 disconnects the negative terminal of battery 310b from ground, and relay RL4 connects the positive terminal of battery 310a to the negative terminal of battery 310b. Thus, the batteries are connected in series to apply 24 volts to the motor 100. As soon as this happens the linear actuator motor 100 starts driving the solar photovoltaic panel to the horizontal position.

Note that all of these actions can be done with or without software algorithm supervision. Thus, upon a software malfunction the hard wired logic provided by the circuit 600 will take control of the system and safely stow the solar photovoltaic panel.

While the above describes a particular embodiment(s) of the invention, it will be appreciated that modifications and variations may be made to the detailed embodiment(s) described herein without departing from the scope of the invention as defined in the appended claims.

## Claims

1. A solar panel assembly (10), comprising:
a foundation tube (14);
a rotary actuator (16) mounted in the foundation tube (14), the actuator having a rotating plate (44) extending out of an end of the foundation tube (14);
a linear actuator (24) having a stationary portion (50) and an extensible portion (52);
a bracket (36) mounted to the rotating plate (44), the bracket (36) having an arm (46) mounted to one of the linear actuator stationary portion (50) and the linear actuator extensible portion (52);
a frame (12) for holding a photovoltaic panel, the frame (12) being pivotally mounted to the bracket (36) and the frame (12) having an arm (48) connected to the other of the linear actuator stationary portion (50) and the linear actuator extensible portion (52).

2. The solar panel assembly (10) according to claim 1, wherein the rotary actuator (16) comprises:
a motor (60);
a gearbox (62) driven by the motor (60);
at least one drive screw (64) connected to and driven by an output of the gearbox (62);
a spindle screw (70) connected to the rotating plate (44);
a drive nut (66) having a first threaded hole (78) for receiving a thread of the at least one drive screw (64) and a second threaded hole (80) for receiving a thread of the spindle screw (70), the guide nut having a guide fin (82);
and
a guide rail (68) interacting with the nut guide fin (82) to constrain the nut from rotating, whereby the rotation of the at least one drive screw by operation of the motor causes the nut to translate linearly which in turn causes the spindle screw to rotate.

3. The solar panel assembly (10) according to claim 2, wherein the gearbox (62) provides a gear reduction between an output of the motor and an output of the gearbox, and wherein the turns ratio between the at least one drive screw and the spindle screw provides a gear reduction between the drive screw and the spindle screw,
and wherein the guide rail (68) is provided in the form of a tubular housing, the motor and gear box being connected to the tubular housing, the at least one drive screw, the spindle screw and the nut each being disposed with the tubular housing, the tubular housing having a channel for receiving the guide fin of the nut.

4. The solar panel assembly (10) according to claim 2, including a second drive screw connected to and driven by an output of the gearbox, wherein the drive nut has another threaded hole for receiving a thread of the second drive screw and a second guide fin, and
the guide rail interacts with the first and second nut guide fin to constrain the nut from rotating.

5. The solar panel assembly (10) according to claim 1, wherein the linear actuator (24) comprises:
a motor (100);
a gearbox (102) driven by the motor (100);
a drive screw (124) connected to and driven by an output of the gearbox (102);
a first tube (104) encompassing the drive screw (124), the first tube being connected to one of the frame arm (48) and the bracket arm (46);
a second tube (106) partially mounted in and extensible from the first tube (104), the second tube (106) being pivotally connected to the other of the frame arm (48) and the bracket arm (46) in a manner so as to prohibit substantive rotation of the second tube (106) relative to the first tube (104);
a drive nut (104) having a threaded hole for receiving a thread of the drive screw (124), the drive nut (104) being disposed within the second tube (106) and having a splined connection to at least one of the first and second tube (104, 106) in order to prohibit rotation of the drive nut (104), whereby the drive nut translates linearly causing the second tube (106) to slide linearly relative to the first tube (104) as the drive screw is rotated by said motor and gearbox.

6. The solar panel assembly (10) according to claim 5, wherein an end portion of the linear actuator drive screw (124) distal of the gearbox output is connected to a concentric post that spaces the drive screw away from inner walls of the second tube.

7. The solar panel assembly (10) according to claim 6, wherein the non-connected end of the second tube includes an end cap disposed within the first tube, the end cap and concentric post spacing the outer wall of second tube away from the inner wall of the first tube.

8. The solar panel assembly (10) according to claim 5, wherein the end of the first tube distal from the gearbox includes an annular seal contacting the outer wall of the second tube.

9. The solar panel assembly (10) according to claim 1, including a rechargeable battery for powering the rotary and linear actuators, and a battery charger connected to a mains power supply for recharging the battery,

## Patentansprüche

1. Solarpaneelanordnung (10) mit:
einem Grundrohr (14),
einem in dem Grundrohr (14) angeordneten Drehaktuator (16), der eine drehbare Scheibe (44) aufweist, die sich aus einem Ende des Grundrohrs (14) hinaus erstreckt,
einem Linearaktuator (24) mit einem feststehenden Abschnitt (50) und einem erweiterbaren Abschnitt (52),
einer an der drehbaren Scheibe (44) angebrachten Halterung (36), die einen Arm (46) aufweist, der entweder mit dem feststehenden Abschnitt (50) des Linearaktuators oder mit dem erweiterbaren Abschnitt (52) des Linearaktuators verbunden ist,
einem Rahmen (12) zum Halten eines Photovoltaikpaneels, der drehbar mit der Halterung (36) verbunden ist und der einen Arm (48) aufweist, der mit dem entsprechend anderen Abschnitt des feststehenden Abschnitts (50) des Linearaktuators bzw. des erweiterbaren Abschnitts (52) des Linearaktuators verbunden ist.

2. Solarpaneelanordnung (10) nach Anspruch 1, wobei der Drehaktuator (16) folgendes umfasst:
einen Motor (60),
ein von dem Motor (60) angetriebenes Getriebe (62),
mindestens eine Antriebsschraube (64), die mit einem Ausgang des Getriebes (62) verbunden ist und durch diesen angetrieben wird,
eine mit der drehbaren Scheibe (44) verbundene Spindelschraube (70),
eine Antriebsmutter (66) mit einem ersten Gewindeloch (78) zur Aufnahme eines Gewindes der mindestens einen Antriebsschraube (64) und einem zweiten Gewindeloch (80) zur Aufnahme eines Gewindes der Spindelschraube (70), wobei die Führungsmutter einen Führungsflügel (82) aufweist, und
eine Führungsschiene (68), die mit dem Führungsmutterflügel (82) zusammenwirkt, um die Mutter am Drehen zu hindern, wobei die Drehung der mindestens einen Antriebsschraube durch Einsatz des Motors eine geradlinige Verschiebung der Mutter bewirkt, was wiederum eine Drehung der Spindelschraube bewirkt.

3. Solarpaneelanordnung (10) nach Anspruch 2, wobei das Getriebe (62) eine Getriebeuntersetzung zwischen einem Ausgang des Motors und einem Ausgang des Getriebes bereitstellt, und wobei das Umdrehungsverhältnis zwischen der mindestens einen Antriebsschraube und der Spindelschraube eine Getriebeuntersetzung zwischen der Antriebsschraube und der Spindelschraube bereitstellt,
und wobei die Führungsschiene (68) in Form eines rohrförmigen Gehäuses bereitgestellt ist, der Motor und das Getriebe mit dem rohrförmigen Gehäuse verbunden sind, die mindestens eine Antriebsschraube, die Spindelschraube und die Mutter jeweils in dem rohrförmigen Gehäuse angeordnet sind und das rohrförmige Gehäuse einen Kanal zur Aufnahme des Führungsflügel der Mutter aufweist.

4. Solarpaneelanordnung (10) nach Anspruch 2, mit einer zweiten Antriebsschraube, die mit einem Ausgang des Getriebes verbunden ist und durch diesen angetrieben wird, wobei die Antriebsmutter ein weiteres Gewindeloch zur Aufnahme eines Gewindes der zweiten Antriebsschraube und einen zweiten Führungsflügel aufweist, und
die Führungsschiene mit dem ersten und zweiten Führungsmutterflügel zusammenwirkt, um die Mutter am Drehen zu hindern.

5. Solarpaneelanordnung (10) nach Anspruch 1, wobei der Linearaktuator (24) folgendes umfasst:
einen Motor (100),
ein durch den Motor (100) angetriebenes Getriebe (102),
eine Antriebsschraube (124), die mit einem Ausgang des Getriebes (102) verbunden ist und durch diesen angetrieben wird,
ein die Antriebsschraube (124) umschließendes erstes Rohr (104), das entweder mit dem Rahmenarm (48) oder mit dem Halterungsarm (46) verbunden ist,
ein teilweise in dem ersten Rohr (104) angebrachtes und daraus ausziehbares zweites Rohr (106), das drehbar mit dem entsprechend anderen Arm des Rahmenarms (48) bzw. des Halterungsarms (46) in einer Weise verbunden ist, die eine substantielle Drehung des zweiten Rohrs (196) relativ zu dem ersten Rohr (104) verhindert,
eine Antriebsmutter (104) mit einem Gewindeloch zur Aufnahme eines Gewindes der Antriebsschraube (124), wobei die Antriebsmutter (104) in dem zweiten Rohr (106) angeordnet ist und eine verkeilte Verbindung zu mindestens einem von dem ersten und dem zweiten Rohr (104, 106) aufweist, um eine Drehung der Antriebsmutter (104) zu verhindern, wobei die Antriebsmutter sich geradlinig verschiebt und ein geradliniges Rutschen des zweiten Rohrs (106) relativ zu dem ersten Rohr (104) bewirkt, wenn die Antriebsschraube durch den Motor und das Getriebe gedreht wird.

6. Solarpaneelanordnung (10) nach Anspruch 5, bei der ein von dem Getriebeausgang wegweisender Endabschnitt der Antriebsschraube des Linearaktuators (124) mit einem konzentrischen Pfosten verbunden ist, der die Antriebsschraube von Innenwänden des zweiten Rohrs beabstandet.

7. Solarpaneelanordnung (10) nach Anspruch 6, bei der das nicht verbundene Ende des zweiten Rohrs ein in dem ersten Rohr angeordnetes Endstück aufweist, das zusammen mit dem konzentrischen Pfosten die Außenwand des zweiten Rohrs von der Innenwand des ersten Rohrs beabstandet.

8. Solarpaneelanordnung (10) nach Anspruch 5, bei der das von dem Getriebe wegweisende Ende des ersten Rohrs eine kreisförmige Dichtung aufweist, die in Kontakt mit der Außenwand des zweiten Rohrs ist.

9. Solarpaneelanordnung (10) nach Anspruch 1, mit einer wiederaufladbaren Batterie zum Antreiben des Dreh- und Linearaktuators und einem Batterieladegerät, das mit einer Hauptstromversorgung zum Wiederaufladen der Batterie verbunden ist.

## Revendications

1. Ensemble formant panneau solaire (10), comprenant :
un tube de fondation (14) ;
un actionneur rotatif (16) monté dans le tube de fondation (14), l'actionneur ayant une plaque rotative (44) s'étendant hors d'une extrémité du tube de fondation (14) ;
un actionneur linéaire (24) ayant une portion stationnaire (50) et une portion extensible (52) ;
une platine (36) montée sur la plaque rotative (44), la platine (36) ayant un bras (46) monté sur une portion parmi la portion stationnaire (50) de l'actionneur linéaire et la portion extensible (52) de l'actionneur linéaire ;
un cadre (12) pour tenir un panneau photovoltaïque, le cadre (12) étant monté en pivotement sur la platine (36) et le cadre (12) ayant un bras (48) connecté à l'autre portion parmi la portion stationnaire (50) de l'actionneur linéaire et la portion extensible (52) de l'actionneur linéaire.

2. Ensemble formant panneau solaire (10) selon la revendication 1, dans lequel l'actionneur rotatif (16) comprend:
un moteur (60) ;
une boîte d'engrenages (62) entraînée par le moteur (60);
au moins une vis motrice (64) connectée à et entraînée par une sortie de la boîte d'engrenages (62) ;
une vis à broche (70) connectée à la plaque rotative (44);
un écrou moteur (66) ayant un premier trou taraudé (78) pour recevoir un filetage de ladite au moins une vis motrice (64) et un second trou taraudé (80) pour recevoir un filetage de la vis à broche (70), l'écrou de guidage ayant une ailette de guidage (82) ; et
un rail de guidage (68) qui coopère avec l'ailette de guidage de l'écrou (82) pour restreindre l'écrou à l'encontre d'une rotation, grâce à quoi la rotation de ladite au moins une vis motrice par fonctionnement du moteur amène l'écrou à décrire une translation linéaire qui amène à son tour la vis à broche à tourner.

3. Ensemble formant panneau solaire (10) selon la revendication 2, dans lequel la boîte à engrenages (62) assure une réduction de rapport entre une sortie du moteur et une sortie de la boîte d'engrenages, et dans lequel le rapport des révolutions entre ladite au moins une vis motrice et la vis à broche assure une réduction de rapport entre la vis motrice et la vis à broche,
et dans lequel le rail de guidage (68) est prévu sous la forme d'un boîtier tubulaire, le moteur et la boîte d'engrenages étant connectés au boîtier tubulaire, ladite au moins une vis motrice, la vis à broche et l'écrou étant disposés chacun dans le boîtier tubulaire, et le boîtier tubulaire ayant un canal pour recevoir l'ailette de guidage de l'écrou.

4. Ensemble formant panneau solaire (10) selon la revendication 2, incluant une seconde vis motrice connectée à et entraînée par une sortie de la boîte d'engrenages, dans lequel l'écrou moteur comporte un autre trou taraudé pour recevoir un filetage de la seconde vis motrice et une seconde ailette de guidage, et
le rail de guidage coopère avec la première et la seconde ailette de guidage de l'écrou pour restreindre l'écrou à l'encontre d'une rotation.

5. Ensemble formant panneau solaire (10) selon la revendication 1, dans lequel l'actionneur linéaire (24) comprend : un moteur (100) ;
une boîte d'engrenages (102) entraînée par le moteur (100) ;
une vis motrice (124) connectée à et entraînée par une sortie de la boîte d'engrenages (102) ;
un premier tube (104) qui enveloppe la vis motrice (124), le premier tube étant connecté à un bras parmi le bras du cadre (48) et le bras de la platine (46) ;
un second tube (106) monté partiellement dans et capable d'extension hors du premier tube (104), le second tube (106) étant connecté en pivotement à l'autre bras parmi le bras du cadre (48) et le bras de la platine (46) de manière à empêcher sensiblement une rotation du second tube (106) par rapport au premier tube (104) ;
un écrou moteur (104) ayant un trou taraudé pour recevoir un filetage de la vis motrice (124), l'écrou moteur (104) étant disposé dans le second tube (106) et ayant une connexion à cannelures avec au moins un tube parmi le premier et le second tube (104, 106) afin d'empêcher une rotation de l'écrou moteur (104), grâce à quoi l'écrou moteur effectue une translation linéaire amenant le second tube (106) à coulisser linéairement par rapport au premier tube (104) lorsque la vis motrice est mise en rotation par ledit moteur et ladite boîte d'engrenages.

6. Ensemble formant panneau solaire (10) selon la revendication 5, dans lequel une portion terminale de la vis motrice (124) de l'actionneur linéaire, en situation distale par rapport à la sortie de la boîte d'engrenages, est connectée à un pilier concentrique qui écarte la vis motrice en éloignement des parois intérieures du second tube.

7. Ensemble formant panneau solaire (10) selon la revendication 6, dans lequel l'extrémité non connectée du second tube inclut un capuchon terminal disposé à l'intérieur du premier tube, le capuchon terminal et le pilier concentrique écartant la paroi extérieure du second tube en éloignement de la paroi intérieure du premier tube.

8. Ensemble formant panneau solaire (10) selon la revendication 5, dans lequel l'extrémité du premier tube, en situation distale par rapport à la boîte d'engrenages, inclut un joint annulaire en contact avec la paroi extérieure du second tube.

9. Ensemble formant panneau solaire (10) selon la revendication 1, incluant une batterie rechargeable pour alimenter en puissance les actionneurs rotatifs et linéaires, et un chargeur de batterie connecté à une alimentation de puissance générale pour recharger la batterie.
